# EUROPEAN PATENT APPLICATION

(11) **EP 2 759 191 A1**
(43) Date of publication of application: **30.07.2014**
(21) Application number: 14397503.5
(22) Date of filing: 14.01.2014
(51) Int. Cl.: A01D 41/127, G01N 27/22

(54) **Moisture meter for determining the moisture content of particulate material**

(30) Priority: 29.01.2013 FI 20135083
(71) Applicant: Farmcomp OY, 04360 Tuusula (FI)
(72) Inventor: Kivijärvi, Janne, 02230 Espoo (FI); Keskiaho, Jere, 01450 Vantaa (FI); Hyrsky, Johannes, 02940 Espoo (FI)
(74) Representative: Boco IP Oy Ab

(57) **Abstract**

The invention relates to a moisture meter for determining the moisture content of particulate material. The moisture meter comprises a frame part (1), a space (2), a measuring cup (3) disposed within said space (2) for receiving a sample of the particulate material which moisture is to be measured, and moisture measuring means. The moisture meter comprises a swiping means (9) for removing at least partly a part of a sample of particulate material which moisture is to be measured, which part of the sample of particulate material extends out of the inner space of the measuring cup (3) through the open end of the measuring cup (3). The swiping means (9) are movably attached to the frame part (1) for movement in a swiping path where a swiping member (10) of the swiping means (9) is configured to move essentially along the open end of the measuring cup (3).

## Description

### Field of the invention

The invention relates to a moisture meter for determining the moisture content of particulate material as defined in the preamble of independent claim 1.

By particulate material is meant for example, but not excluding other particulate materials, grain in ungrounded state and in ground state.

Electrical moisture measuring methods employed most frequently in measuring the moisture content of granular material are based either on measurement of resistance in which the effect of moisture on the resistance of the material being examined is observed, on measurement of capacitance in which the moisture alters the dielectric constant and consequently the capacitance of the pick-up, or on impedance measurement in which the effect of moisture both on the resistance and the capacitance of the pick-up is observed.

In all said measuring modes a sample must be used, in order to gain an accurate moisture content figure for the material under examination, which prior to the measuring event has been brought into a given state, which must be repeatable at different times of measuring. This may be done e.g. by measurement of bulk density, or by pressing the sample against the measuring electrodes with a known force.

Publication WO 85/00427 presents a moisture meter.

### Objective of the invention

The object of the invention is to provide an improved moisture meter which is capable of repeatable providing a standardized sample of particulate material having essentially the same volume.

### Short description of the invention

The moisture meter is characterized by the definitions of independent claim 1.

Preferred embodiments of the moisture meter are defined in the dependent claims 2 to 17.

The moisture meter comprises a swiping means for removing at least partly a part of a sample of particulate material whose moisture is to be measured and which has been poured into the inner space of the measuring cup through the open end of the measuring cup, which part of the sample of particulate material extends out of the inner space of the measuring cup through the open end of the measuring cup. The swiping means being movably attached to the frame part for movement in a swiping path where a swiping member of the swiping means is configured to move essentially along the open end of the measuring cup so that the (possible) part of particulate material that has been poured into the inner space of the measuring cup and that extends outside the inner space of the measuring cup through the open end of the measuring cup is swept off by the swiping means.

The volume of the inner space of the measuring cup can be considered to be defined by a bottom wall, a cylindrical side wall and an imaginary top wall at the open end of the measuring cup. The swiping means is movably attached to the frame part for movement in a swiping path where a swiping member of the swiping means is configured to move essentially along an imaginary top wall at the open end of the measuring cup so that the volume of the sample will have essentially the volume of the measuring cup.

### List of figures

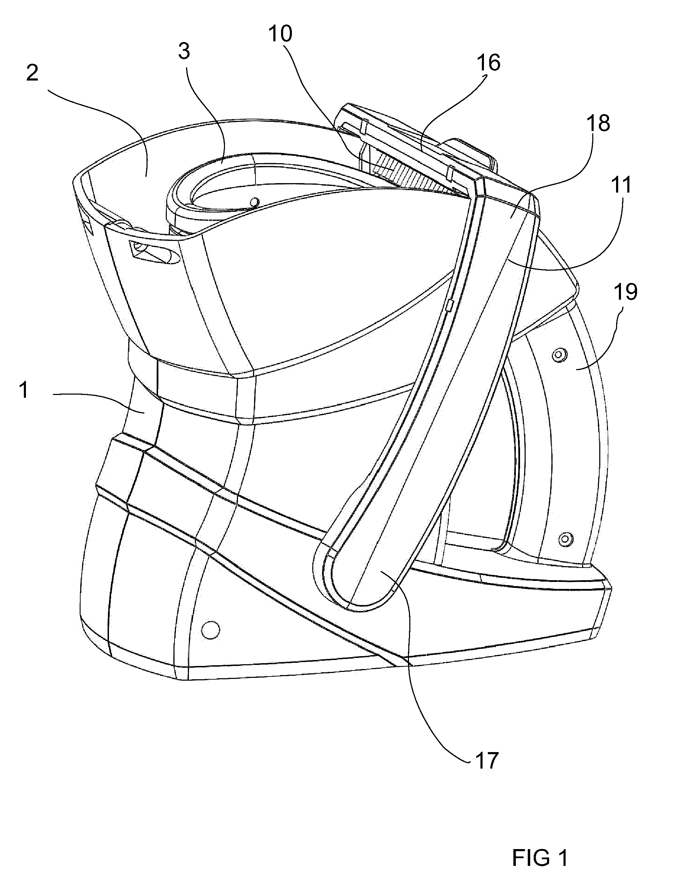

In the following the invention will described in more detail by referring to the figures of which
Figure 1 shows an embodiment of the moisture meter,

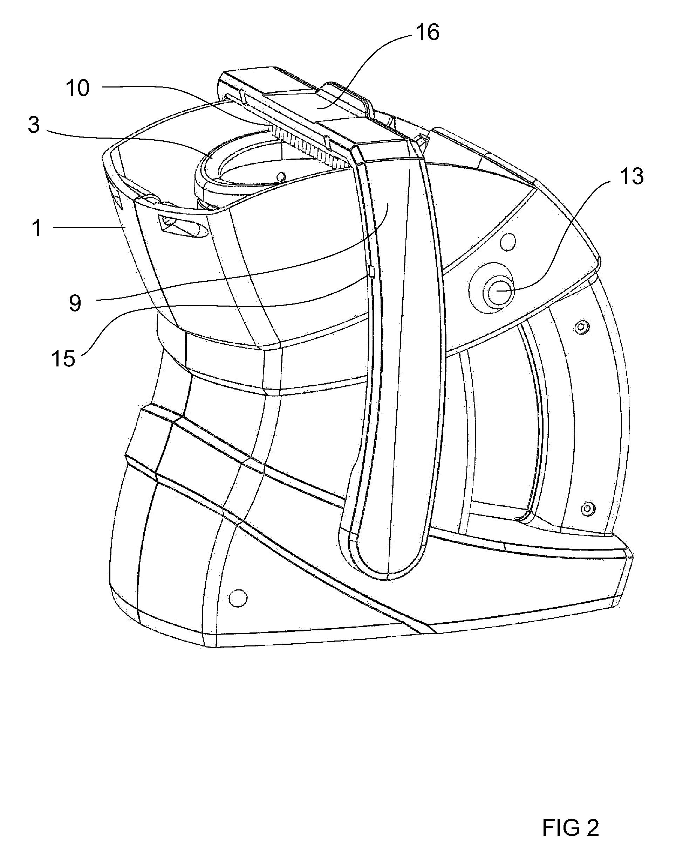

Figure 2 shows the moisture meter shown in figure 1 in a stage where the swiping means have been moved along the open end of the measuring cup in the swiping path,

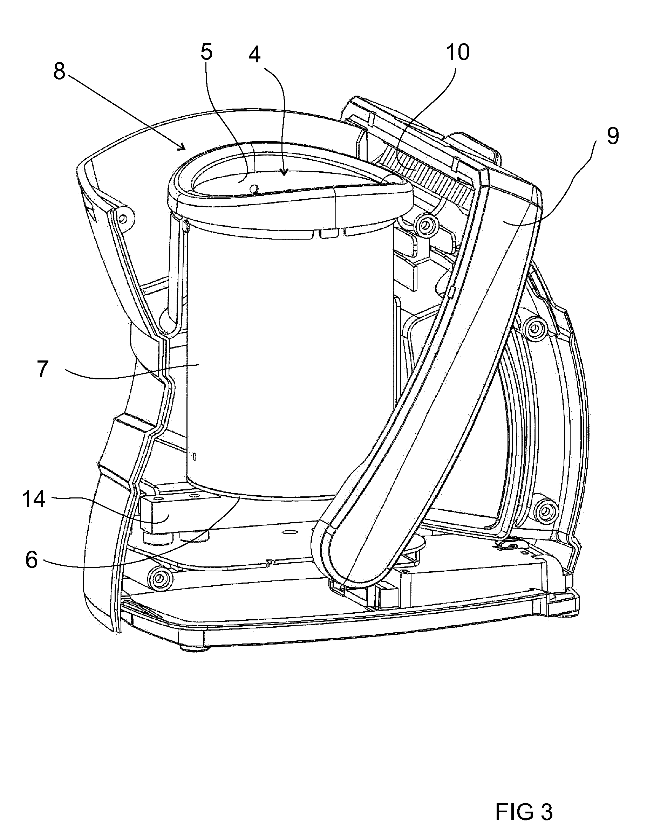

Figure 3 shows the moisture meter shown in figure 1 in partly disassembled stage,

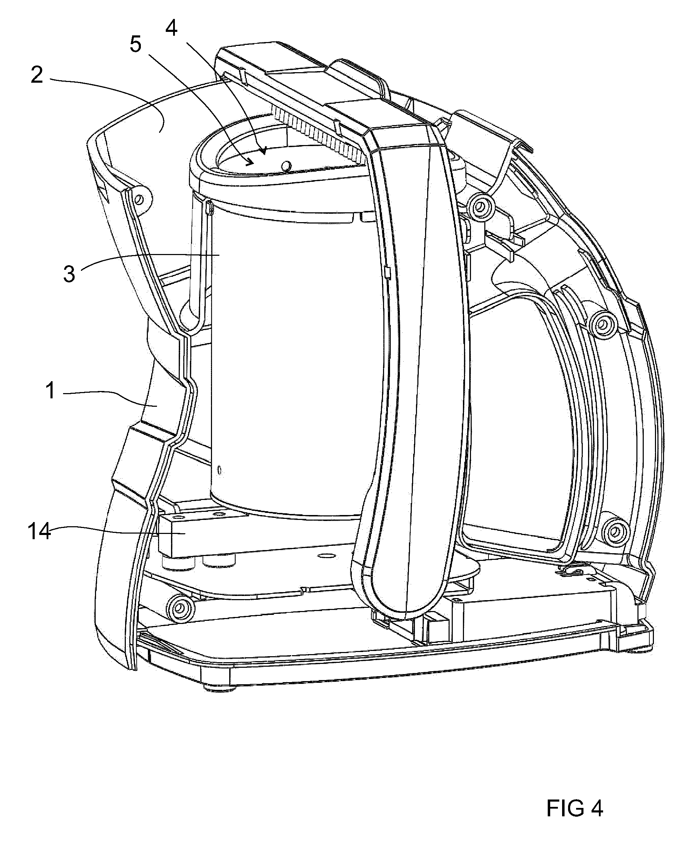

Figure 4 shows the moisture meter shown in figure 3 in partly disassembled stage, where the swiping means have been moved along the open end of the measuring cup in the swiping path,
Figure 5 shows the moisture meter shown in figure 1 as seen from above, and

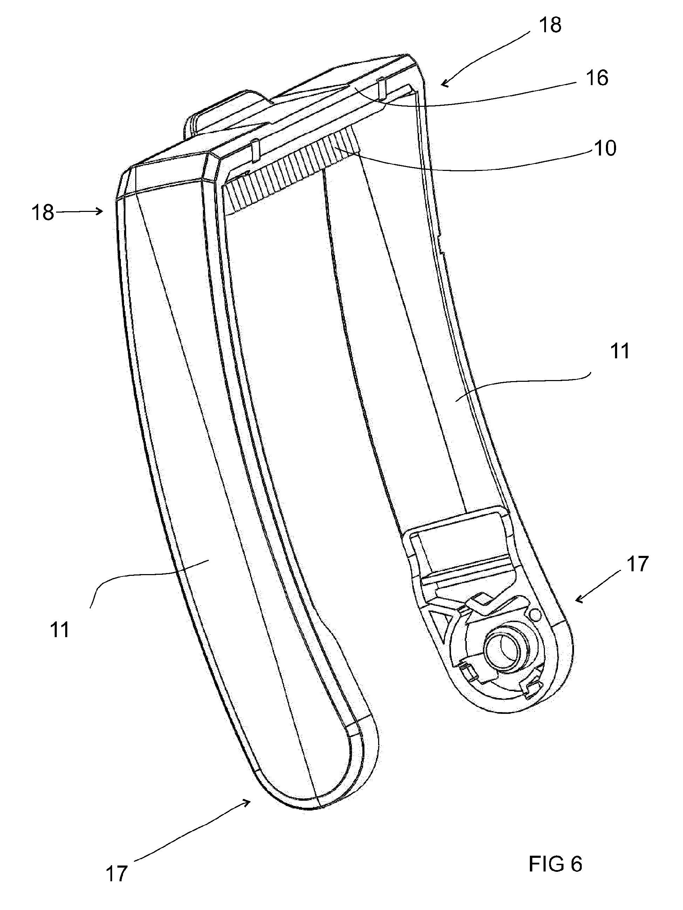

Figure 6 shows the swiping means of the moisture meter shown in figure 1.

### Detailed description of the invention

The figure shows a moisture meter for determining the moisture content of particulate material.

The moisture meter comprises a frame part 1.

The moisture meter comprises a space 2 defined by said frame part 1.

The moisture meter comprises a measuring cup 3 disposed within said space 2 for receiving a sample of the particulate material (not shown in the drawings) whose moisture is to be measured, wherein measuring cup 3 having an open end 4 through which particulate material whose moisture is to be measured is to be poured and an inner space 5 having a given volume.

The moisture meter comprises moisture measuring means for measuring the moisture content of a sample of the particulate material received in the measuring cup 3.

Said moisture measuring means for measuring the moisture content of a sample of the particulate material received in the measuring cup 3 may, as known to those skilled in the art, be formed so that in said moisture meter said measuring cup 3 being a capacitor of which the impedance is proportional to the moisture content and quantity of a sample of the particulate material received in the measuring cup 3. Alternatively the moisture measuring means may for example be optical moisture measuring means for measuring the moisture content of a sample of the particulate material received in the measuring cup 3

The moisture meter comprises a swiping means 9 for removing at least partly a part of a sample of particulate material whose moisture is to be measured and which has been poured into the inner space of the measuring cup 3 through the open end of the measuring cup 3, which part of the sample of particulate material extends out of the inner space of the measuring cup 3 through the open end of the measuring cup 3. The swiping means 9 being movably attached to the frame part 1 for movement in a swiping path where a swiping member 10 of the swiping means 9 is configured to move essentially along the open end of the measuring cup 3.

The volume of the inner space of the measuring cup 3 can be considered to be defined by a bottom wall 6, a cylindrical side wall 7 and an imaginary top wall 8 at the open end of the measuring cup 3. The swiping means 9 is movably attached to the frame part 1 for movement in a swiping path where a swiping member 10 of the swiping means 9 is configured to move essentially along the imaginary top wall at the open end of the measuring cup 3 so that the volume of the sample will have essentially the volume of the measuring cup 3.

The swiping means 9 may be manually operable.

The measuring cup 3 is preferably, but not necessarily, supported by a scales means (not shown in the drawings) on the frame part 1 of the moisture meter. Said scales means may comprise a load cell 14 arranged between the frame part 1 of the moisture meter and the measuring cup 3 to measure the weight of the particulate material that has been poured into the measuring cup 3. The moisture meter may be arranged to indicate directly the bulk density of the sample of particulate material.

The moisture meter comprises preferably, but not necessarily, a temperature sensing element (not shown in the drawings) that has been arranged to project from the wall such as from the bottom wall 6 of the measuring cup 3 into the sample of particulate material that has been poured into the measuring cup 3.

The moisture comprises preferably, but not necessarily, a temperature sensing element which has been arranged to push from the wall such as from a cylindrical side wall 7 of the measuring cup 3 into the sample of particulate material that has been poured into the measuring cup 3.

In the moisture meter shown in the figures, the swiping means 9 comprises two elongate members 11 pivotally attached at opposite sides of the frame part 1 and having said swiping member 10 arranged between said two elongate members for moving said swiping member 10 in said swiping path. In the figures, the swiping member 10 is arranged between said two elongate members 11 by means of a handle member 16 rigidly attached a between said two elongate members 11 so that the swiping member 10 is fixedly or removable attached to the handle member 16 for manually moving said swiping member 10 in said swiping path. An advantage with such swiping means 9 is that the swiping means 9 has a simple and robust construction and is easy to use, which is an advantage especially if the moisture meter, as in the figures, is in the form of a portable moisture meter.

The swiping means 9 of the moisture meter may comprise two elongate members 11 each having a first end 17 in the region of which the elongate member 11 is pivotally attached to a side of the frame part 1 and each having a second end 18 at which the elongate member 11 is rigidly connected to a handle member 16 so that the handle member 16 is arranged between the second end 18 of said two elongate members 11 for manually moving said swiping member 10 that is fixedly or removable attached to the handle member 16 in said swiping path where the swiping member 10 of the swiping means 9 is configured to move essentially along the open end of the measuring cup 3. An advantage with such swiping means 9 is that the swiping means 9 has a simple and robust construction and is easy to use, which is an advantage especially if the moisture meter, as in the figures, is in the form of a portable moisture meter.

In the embodiment of the moisture meter shown in the drawings, the swiping means 9 of the moisture meter may be considered to have a generally U-formed configuration so that the swiping means 9 has two leg members in the form of an elongate member 11 and an intermediate member in the form of a handle member 16 connecting the elongate members 11. In the embodiment of the moisture meter shown in the drawings, the swiping means 9 is symmetrically formed with respect to a central plane (not shown in the drawings) of the swiping means 9. In the embodiment of the moisture meter shown in the drawings, the swiping member 10 is attached to the handle member 16. In the embodiment of the moisture meter shown in the drawings, each of the elongate members 11 is pivotally attached to a side of the frame part 1 so that the elongate members 11 are pivotally attached to a side of the frame part 1 at opposite sides of the frame part 1. In the embodiment of the moisture meter shown in the drawings, the swiping means 9 of the moisture meter is manually operable for manually moving said swiping member 10 that is attached to the handle member 16 in said swiping path where the swiping member 10 of the swiping means 9 is configured to move essentially along the open end of the measuring cup 3. An advantage with such swiping means 9 is that the swiping means 9 has a simple and robust construction and is easy to use, which is an advantage especially if the moisture meter, as in the figures, is in the form of a portable moisture meter.

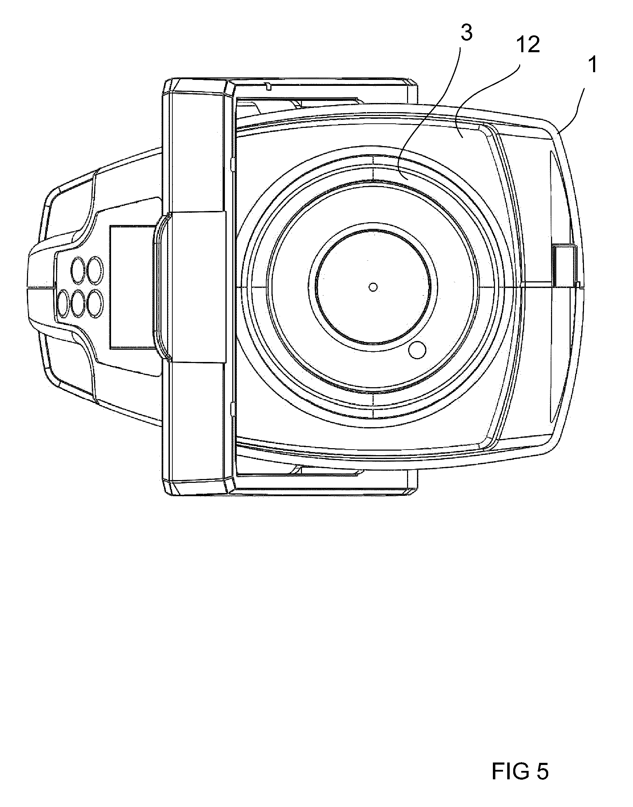

In the moisture meter shown in the figures, the moisture meter is provided with a receiving vessel 12 at least partly, in figure 5 completely, surrounding the measuring cup 3 in the frame part 1 for receiving particulate material removed by the swiping means 9.

In the moisture meter shown in the figures, the swiping means 9 is functionally connected to the moisture measuring means by a sensing means 13 sensing that the swiping member 10 has been moved at least partly in said swiping path along the opening of the measuring cup 3 so that the moisture meter is configured to automatically start a measuring process to determine the moisture content of the particulate material in the measuring cup 3 once the swiping means 9 has been utilized for removing excess particulate material. In the moisture meter shown in the figures, the sensing means 13 comprises a Hall effect sensor located within the frame part 1 and a magnet 15 located in the elongate member 11 of the swiping means 9.

In the moisture meter shown in the figures, the swiping member 10 of the swiping means 9 is in the form of a brush. The swiping member 10 of the swiping means 9 could alternatively comprise another form of flexible member or elastic member. Alternatively, the swiping means 9 can be made at least partly flexible or at least partly elastic. The purpose of the flexibility or the elasticity is to prevent large kernels, grains or similar from getting stuck during swiping.

In the moisture meter shown in the figures, the measuring cup 3 has a cylindrical configuration.

The moisture meter is preferably, but not necessarily, a portable moisture meter. The moisture meter shown in the figures has a handle 19 for holding the moisture meter for example during use of the swiping means 9 and/or for carrying the moisture meter.

It is apparent to a person skilled in the art that as technology advanced, the basic idea of the invention can be implemented in various ways. The invention and its embodiments are therefore not restricted to the above examples, but they may vary within the scope of the claims.

## Claims

1. A moisture meter for determining the moisture content of particulate material, comprising
a frame part (1),
a space (2) defined by said frame part (1), and
a measuring cup (3) disposed within said space (2) for receiving a sample of the particulate material whose moisture is to be measured, wherein measuring cup (3) having an open end through which particulate material which moisture is to be measured is to be poured and an inner space having a given volume,
moisture measuring means for measuring the moisture content of a sample of the particulate material received in the measuring cup (3),
**characterized**
**by** a swiping means (9) for removing at least partly a part of a sample of particulate material which moisture is to be measured and which has been poured into the inner space of the measuring cup (3) through the open end of the measuring cup (3), which part of the sample of particulate material extends out of the inner space of the measuring cup (3) through the open end of the measuring cup (3), and
by the swiping means (9) being movably attached to the frame part (1) for movement in a swiping path where a swiping member (10) of the swiping means (9) is configured to move essentially along the open end of the measuring cup (3).

2. The moisture meter according to claim 1, **characterized by** said moisture measuring means for measuring the moisture content of a sample of the particulate material received in the measuring cup (3) being formed so that in said moisture meter said measuring cup (3) being a capacitor of which the impedance is proportional to the moisture content and quantity of a sample of the particulate material received in the measuring cup (3).

3. The moisture meter according to claim 1 or 2, **characterized by** the measuring cup (3) being supported by a weighing means on the frame part (1) of the moisture meter.

4. The moisture meter according to claim 3, **characterized by** said weighing means comprises a load cell (14).

5. The moisture meter according to claim 3 or 4, **characterized by** the moisture meter has been arranged to indicate directly the bulk density of the sample of particulate material.

6. The moisture meter according to any of the claims 1 to 5, **characterized by** a temperature sensing element has been arranged to push from the bottom or from the wall of the measuring cup (3) into the sample of particulate material that has been poured into the measuring cup (3).

7. The moisture meter according to any of the claims 1 to 6, **characterized by** the swiping means (9) comprising two elongate members (11) pivotally attached at opposite sides to the frame part (1) for moving said swiping member (10) in said swiping path.

8. The moisture meter according to any of the claims 1 to 7, **characterized by** the swiping means (9) comprising two elongate members (11) pivotally attached at opposite sides of the frame part (1) and having said swiping member (10) arranged between said two elongate members (11) for moving said swiping member (10) in said swiping path.

9. The moisture meter according to any of the claims 1 to 8, **characterized by** the measuring cup (3) having a cylindrical configuration.

10. The moisture meter according to any of the claims 1 to 9, **characterized by** a receiving vessel (12) at least partly surrounding the measuring cup (3) in the frame part (1) for receiving particulate material removed by the swiping means (9).

11. The moisture meter according to any of the claims 1 to 10, **characterized by** the swiping means (9) being functionally connected to the moisture measuring means by a sensing means (13) sensing that the swiping member (10) has been moved at least partly in said swiping path along the opening of the measuring cup (3).

12. The moisture meter according to claim 11, **characterized by** the sensing means (13) comprising a Hall effect sensor located within frame part (1) and a magnet (15) located in the swiping means (9).

13. The moisture meter according to any of the claims 1 to 12, **characterized by** the swiping member (10) being in the form of an elastic means or a flexible means such as a brush.

14. The moisture meter according to any of the claims 1 to 13, **characterized by** the swiping means (9) being made at least partly of flexible or elastic material.

15. The moisture meter according to any of the claims 1 to 14, **characterized by** the swiping means (9) being manually operable.

16. The moisture meter according to any of the claims 1 to 15, **characterized by** the moisture meter being a portable moisture meter.

17. The moisture meter according to any of the claims 1 to 16, **characterized**
**by** the swiping means (9) of the moisture meter have a generally U-formed configuration so that the swiping means (9) has two leg members in the form of an elongate member (11) and an intermediate member in the form of a handle member (16) connecting the elongate members (11),
by the swiping means (9) being symmetrically formed with respect to a central of the swiping means (9),
by the swiping member (10) being attached to the handle member (16),
by each of the elongate members (11) being pivotally attached to a side of the frame part (1) so that the elongate members (11) are pivotally attached to a side of the frame part (1) at opposite sides of the frame part (1), and
by the swiping means (9) of the moisture meter being manually operable for manually moving said swiping member (10) that is attached to the handle member (16) in said swiping path, where the swiping member (10) of the swiping means (9) is configured to move essentially along the open end of the measuring cup (3).
